# NEUE EUROPÄISCHE PATENTSCHRIFT

(11) **EP 1 875 989 B2**
(45) Veröffentlichungstag und Bekanntmachung des Hinweises auf die Entscheidung über den Einspruch: **13.03.2013**
(45) Hinweis auf die Patenterteilung: 27.05.2009
(21) Anmeldenummer: 06116618.7
(22) Anmeldetag: 05.07.2006
(51) Int. Cl.: B25G 1/10, B29C 45/16

(54) **Griffelement mit Naturstoff**
Handle with natural material
Poignée avec un matériau naturel

(43) Veröffentlichungstag der Anmeldung: 09.01.2008
(73) Patentinhaber: Ing. Johann Hoertnagl-Werkzeuge GmbH, 6166 Fulpmes (AT)
(72) Erfinder: Pließnig, Gerhard, 6166, Fulpmes (AT); Hörtnagl, Johann, 6166, Fulpmes (AT)
(74) Vertreter: Isarpatent

(56) Entgegenhaltungen:
- EP-A2- 0 116 274
- DE-A1- 4 223 703
- DE-A1- 4 327 082
- DE-A1- 10 248 381
- GB-A- 2 274 615
- GB-A- 2 275 014
- US-A- 5 551 323
- US-A- 5 632 837

## Beschreibung

Die vorliegende Erfindung betrifft ein Griffelement mit einem Naturstoff gemäß dem Oberbegriff des Anspruchs 1 und ein Verfahren zur Herstellung des erfindungsgemäßen Griffelements, gemäß dem Oberbegriff des Anspruchs 11.

Griffe von Werkzeugen sind vielfältigen mechanischen und chemischen Einflüssen ausgesetzt, denen sie widerstehen müssen. Bei einem Schraubenzieher sind dies z.B. das von einer Hand auf die Klinge übertragene Drehmoment. Zugleich sind sie dem Schweiß und z.B. Motoröl ausgesetzt. Griffe werden daher unter Anderem aus Polyethylen gefertigt. Aus dem Kunststoff Polyethylen lassen sich zudem auch alle gewünschten Griffformen spritzen.

Die GB 2 275 014 A beschreibt einen Werkzeuggriff mit einer griffigen Oberfläche aus weichem oder hartem Material, in die Partikel eingearbeitet sind. Die Partikel sind aus synthetischen Fasern, Mineralfasern, Holzpulver.

Die US 5,632,837 beschreibt einen Werkzeuggriff, der durch Glasfasern verstärkt ist.

Die GB 2 274 615 beschreibt ein Verfahren zum Herstellen eines Werkzeuggriffs durch Spritzen eines Kunststoffs zum Formen eines Kernelements und ein Einspritzen eines zweiten Kunststoffs in eine Form um das Kernelement.

Der Kunststoff Polyethylen weist jedoch bei einer dauerhaften Benutzung, z.B. durch einen Handwerker, unangenehme Oberflächeneigenschaften auf. Diese resultieren in verschwitzten Händen, die dann zur Blasenbildung neigen. Insbesondere eignet sich Polyethylen nicht für Werkzeuge, die für körperlich belastende Arbeiten eingesetzt werden, z.B. eine Schaufel, einen schweren Hammer.

Ein weiter Aspekt, der gegen die Verwendung von Polyethylen spricht, ist das leicht unangenehme haptisches Gefühl, das die meisten Kunststoffe auf der Haut auslösen.

Es ist eine Aufgabe der vorliegenden Erfindung einen Griff oder Stiel bereitzustellen, der dauerhaft angenehm in der Hand liegt.

Diese vorgenannte Aufgabe wird durch das Griffelement mit Naturstoffkomponente gemäß dem Anspruch 1, und durch das Verfahren zur Herstellung eines Griffelements gemäß dem Anspruch 9 gelöst.

Das Griffelement weist auf: ein Kernelement aus einem Kunststoff, ein Mantelelement, das das Kernelement zumindest in einem Griffbereich des Griffelements zumindest teilweise umgibt und wobei das Mantelelement ein Stoffgemisch aufweist, das mindestens einen Kunststoff und einen Naturstoff enthält und wobei der Naturstoff Flachs, Baumwolle Schurwolle und/oder Leder enthält.

Das Griffelement setzt sich aus einem mechanisch tragenden und die Kräfte aufnehmenden Kernelement und dem Mantelelement zusammen. Das Mantelelement umgibt den gesamten oder zumindest eine Großteil des Griffbereichs, das heißt den Bereich, den eine Hand berührt.

Es wurde erkannt, dass Leder eine besonders angenehme Oberfläche aufweist, die unter Anderem Schweiß aufnimmt.

Erfindungsgemäß wird der Naturstoff in einen Kunststoff eingebettet. Der Kunststoff wirkt als stützende Matrix zur Übertragung der mechanischen Kräfte zwischen dem Kernelement und der Hand. Ein Teil der Kräfte wird auch durch den Naturstoff übertragen. Der Kunststoff für das Kernelement und der Kunststoff für das Mantelelement können verschieden sein.

Der Naturstoff kann als Partikel in dem Stoffgemisch enthalten sein, die typischerweise eine mittlere Größe von 0,5 mm bis 5 mm aufweisen. Die Partikel sind vorzugsweise zufällig in dem Stoffgemisch verteilt. Hierdurch ergibt sich ein ansprechendes natürliches Aussehen mit einem gesprenkelten Muster.

Das erfindungsgemäße Verfahren zur Herstellung des Griffelements weist folgende Schritte auf:
- Spritzen eines Kunststoffs zum Formen eines Kernelements;
- Vermischen mindestens eines Kunststoffes und eines Naturstoffes, der Flachs, Baumwolle Schurwolleund/oder Leder enthält zu einem Stoffgemisch;
- Erwärmen des Kernelements auf eine Temperatur im Bereich von 40°C bis 100°C; und
- Spritzen des Stoffgemisches um das erwärmte Kernelement zum Formen eines Mantelelements, das an dem Kernelement haftet.

Eine Idee des erfindungsgemäßen Verfahrens besteht darin, das Kernelement und das Mantelelement miteinander materialschlüssig zu verbinden. Dies wird erreicht, indem das Stoffgemisch auf das erwärmte oder noch warme Kernelement aufgespritzt wird. Hierdurch wird ein Verschmelzen oder Vulkanisieren des Stoffgemisches und des Kunststoffes für das Kernelement verbessert.

In einer Ausgestaltung weist das Stoffgemisch mindestens zwei Kunststoffe mit unterschiedlicher Härte in einem vorgegebenen Mischungsverhältnis auf, derart, dass das Stoffgemisch eine gewünschte Härte aufweist. Die gewünschte Härte, z.B. nach Shore, ist für unterschiedliche Anwendungen, d.h. Werkzeuge, verschieden. Durch das Mischen verschiedener Kunststoffe kann jegliche Härte eingestellt werden, ohne dass Weichermacher verwendet werden. Gesundheitliche Bedenken sprechen gegen die Verwendung von Weichmachern.

Gemäß einer Ausführungsform beträgt der Volumenanteil des Naturstoffs an dem Stoffgemisch zwischen 10 % und 50 %, besonders bevorzugt 20 % bis 40 %. Die obere Grenze wird durch die mechanische Belastbarkeit des Mantelelements und die untere Grenze durch das haptische Gefühl vorgegeben, ab dem sich das Mantelelement natürlich und angenehm anfühlt.

Eine Weiterbildung sieht vor, dass das Kernelement und das Mantelelement materialschlüssig miteinander verbunden sind, dabei kann der Kunststoff für das Kernelement und das Stoffgemisch für das Mantelelement miteinander verschmolzen sein. Hierdurch wird ein Ablösen des Mantelelements auch bei hohen mechanischen Belastungen vermieden. Dies steht im Gegensatz zu rein formschlüssigen Verbindungen, bei welchen das Mantelelement das Kernelement nur eng umspannt. Ferner ist kein Klebstoff notwendig zum Verbinden des Mantelelements und des Kernelements notwendig. Die Qualität von Klebstoffen leidet bei großer Wärme oder wenn das Mantelelement mit Motoröl in Berührung kommt. In solchen Fällen kann es ebenfalls zu einem Ablösen des Mantelelements kommen.

Nach einer Weiterbildung weist das Kernelement längsverlaufende und/oder querverlaufende Rillen in dem von dem Mantelbereich umfassten Bereich auf. Die somit vergrößerte Oberfläche erhöht die Haftung der beiden Elemente aneinander.

Das Kernelement kann aus Polyethylen hergestellt sein. Zum Erreichen einer besonderen Steifigkeit, mechanischen Widerstandsfähigkeit oder Härte können dem Kunststoff für das Kernelement Glasfasern und/oder keramische Stoffe beigemischt sein.

In einer Ausgestaltung des erfindungsgemäßen Verfahrens wird der Naturstoff getrocknet wird, bevor er mit dem Kunststoff vermischt wird. Das Trocknen erfolgt vorzugsweise durch Gefriertrocknen.

Die vorliegende Erfindung wird nachfolgend anhand bevorzugter Ausführungsbeispiele und den beigefügten Figuren näher erläutert.

Von den Figuren zeigen:
- Fig. 1: eine Seitenansicht einer Ausführungsform eines Griffes;
- Fig. 2: einen Querschnitt durch die Ausführungsform von Fig. 1;
- Fig. 3: einen Längsschnitt durch die Ausführungsform von Fig. 1;
- Fig. 4: das Kernelement der Ausführungsform von Fig. 1 ohne das Mantelelement; und
- Fig. 5: eine zweite Ausführungsform in Aufsicht.

In den Figuren bezeichnen gleiche Bezugszeichen gleiche oder ähnliche Elemente.

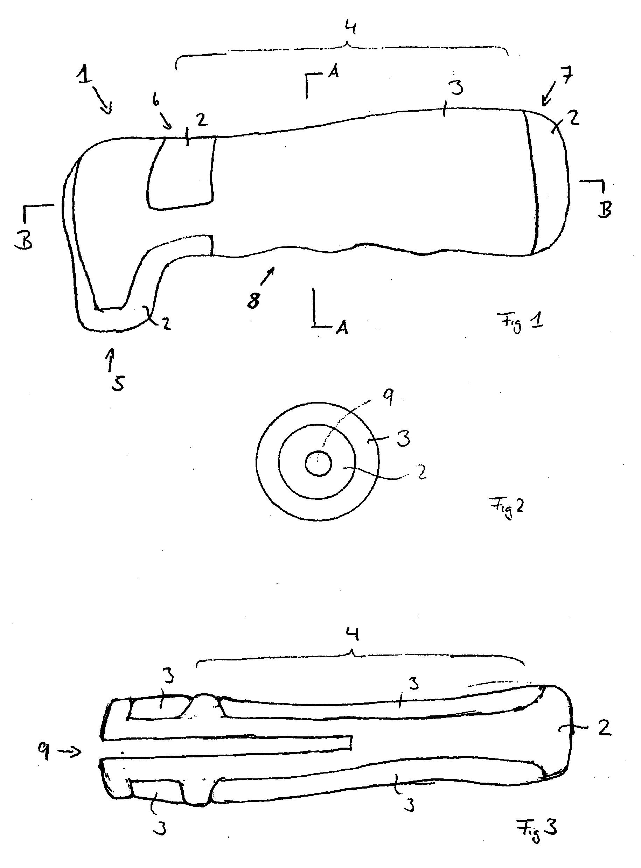

In Fig. 1 ist eine erste Ausführungsform eines Griffelements beispielhaft als Griff für eine Maurerkelle dargestellt. Der Griff 1 weist ein Kernelement 2 und ein Mantelelement 3 auf. Das Mantelelement 3 umschließt das Kernelement 2 in den meisten Bereichen. Somit ist die Oberfläche des Griffes, welche in Kontakt mit einer Hand ist, hauptsächlich durch das Mantelelement 3 gebildet. Dies trifft insbesondere auf den Griffbereich 4 auf, an welchem der Handballen und die meisten Finger der Hand anliegen. In einzelnen Bereichen kann das Kernelement 3 freiliegend sein, das heißt es ist nicht von dem Mantelelement 3 bedeckt. In dem dargestellten Ausführungsbeispiel ist dies für den Fingerschutz 5 der Fall. Ferner ist zur Zierde ein weiterer Bereich 6 durch das Material des Kernelements 2 gebildet. Dieses Zierdeelement 6 kann z.B. auf dem Rücken des Griffes wie in Figur 1 dargestellt angeordnet sein. Das hintere Ende 7 ist beispielhaft ebenfalls nur durch das Kernelement 2 gebildet. Dies kann insbesondere dann vorteilhaft sein, wenn der hintere Bereich zugleich zum Festklopfen oder ähnlichen Funktionen gleich einem Hammer dient.

Der Griff 1 ist in Figur 2 als Querschnitt entlang der Ebene A-A aus Figur 1 gezeigt. Der Griff 1 weist in diesem Bereich typischerweise einen ovalförmigen, kreisförmigen oder anders geartet runden Umfang auf. Das Kernelement 2 ist von dem Mantelelement 3 umgeben. In dem Kernelement 2 ist ein Schaft 9 angeordnet, welcher längs zu dem Griff verläuft.

In Figur 3 ist ein Längsschnitt entlang der Ebene B-B aus Figur 1 gezeigt. In diesem Schaft 9 kann eine Maurerkelle, eine Klinge, etc. befestigt werden.

Das Kernelement besteht vorzugsweise aus einem sehr steifen Kunststoff. Bevorzugt wird Polypropylen. Zur zusätzlichen Härtung gegenüber mechanischen Stößen können in das Polypropylen Glasfasern eingebettet sein, die dem Kernelement 2 eine höhere Festigkeit und Steifigkeit geben. Ferner können härtende Partikel, z.B. aus Keramik in den Kunststoff eingebettet sein.

Eine Hand berührt den Griff 1 in dem Griffbereich 4. Dessen Oberfläche ist hauptsächlich durch das Mantelelement 3 gebildet. Ein angenehmer Hautkontakt wird durch Naturstoffe in dem Mantelelement 3 erreicht. Die Naturstoffe umfassen faserartige Naturstoffe oder Leder. Die faserartigen Naturstoffe sind Flachs, Baumwolle oder Schurwolle. Die Textur- und Oberflächeneigenschaften von Naturstoffen empfinden die meisten Menschen als angenehmer, als die in der Regel der glatten oder auch künstlich aufgerauten Kunststoffoberflächen. Zusätzlich sind die Naturstoffe in der Lage, Schweiß aufzunehmen. Dies verhindert feuchte Hände, welche unter mechanischer Belastung zur Blasenbildung neigen.

Die Naturstoffkomponente ist mit dem Kernelement 2 fest verbunden, damit eine Übertragung von Kräften zwischen der Hand und dem Werkzeug gewährleistet ist. Die obig angegebenen Naturstoffe sind dazu in einer Kunststoffmatrix eingebettet. Die Kunststoffmatrix des Mantelelements 3 ist mit dem Kunststoff des Kernelements 2 verschmolzen. Ferner können die beiden Kunststoffe miteinander vulkanisiert oder in anderer Weise materialschlüssig miteinander verbunden sein. Ein Ablösen des Mantelelements 3 von dem Kernelement 2 wird durch die materialschlüssige Verbindung verhindert. Selbst unter großen mechanischen Belastungen kann sich somit das Mantelelement 3 nicht gegenüber dem Kernelement 2 verschieben oder verdrehen.

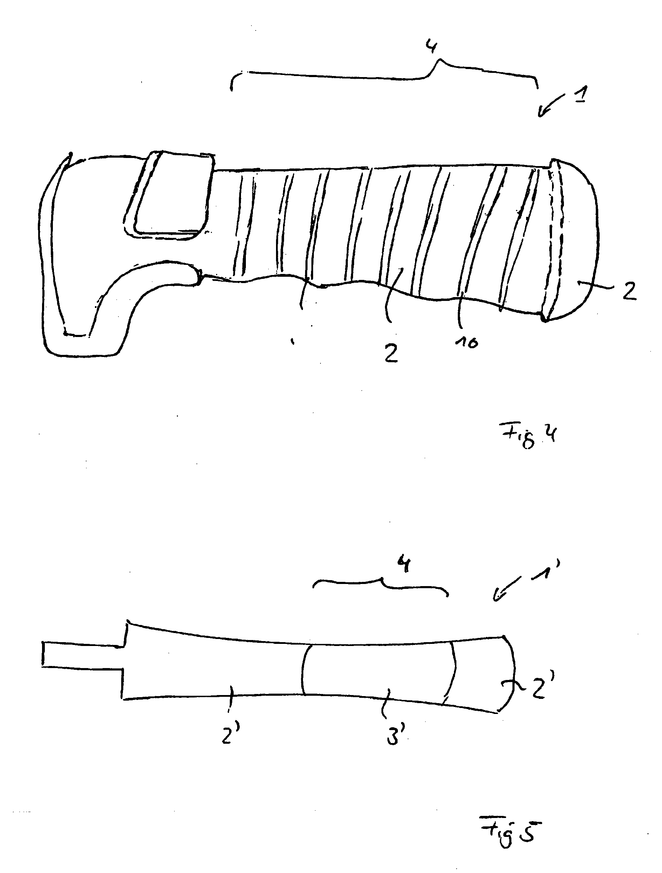

In Figur 4 ist eine beispielhafte Ausgestaltung des Kernelements 2 dargestellt. Zu illustratorischen Zwecken ist das Mantelelement 3 nicht dargestellt. Eine höhere Haftung zwischen dem Kernelement 2 und dem Mantelelement 3 kann durch eine Strukturierung der Oberfläche des Kernelements 2 erreicht werden. Die Strukturierung kann wie beispielhaft dargestellt durch ringförmige Rillen 10 erreicht werden. Ferner können in das Kernelement 2 auch längsverlaufende Rillen oder andere Muster eingeprägt sein.

In Figur 5 ist eine zweite Ausführungsform des Griffelements dargestellt. Dieses weist in gleicher Weise ein Kernelement 2' und ein Mantelelement 3' in einem Griffbereich 4 auf. Das Griffelement kann zum Beispiel für einen Hammer oder eine Axt verwendet werden, und wird im allgemeinen Sprachgebrauch als Stiel bezeichnet. Im Rahmen dieser vorliegenden Beschreibung sollen solche Stiele jedoch auch als Griffelemente betrachtet werden.

Ein wesentlicher Aspekt der Griffelemente ist, dass sich das Mantelelement 3 nicht von dem Griff, d.h. dem Kernelement 2 löst. Hierzu muss eine Kunststoffmatrix bereitgestellt werden, in dem einerseits der Naturstoff mit seinen gewünschten natürlichen Eigenschaften eingebettet werden kann und andererseits eine materialschlüssige Verbindung mit dem Kernelement 2 eingeht. Es wurde erkannt, das dies unter anderem hauptsächlich von der Wahl der Naturstoffe abhängt. Insbesondere eignen sich als Naturstoffe die bereits erwähnten faserartigen Naturstoffe und Leder.

Leder kann als kleine Stückchen mit Durchmessern von 0,5 bis 5mm bereitgestellt werden. Die faserartigen Naturstoffe weisen eine Länge von 0,5 bis 5mm auf. Die Kunststoffmatrix weist bevorzugt Styrolbutadienstyrol (SBS), Etylenvinylacetat (EVA), Polypropylen (PP), Polyethylen (PE), Polysterol (PS), SEDS, TPO, TPK auf.

Die Einstellung der Härte (nach Shore) kann durch die Wahl geeigneter Polymere eingestellt werden. Hierzu können auch verschiedene Polymere gemischt werden. Das Mantelelement 3 der zuvor beschriebenen Griffelemente kommt ohne die Verwendung von Weichmachern aus. Dies wird aufgrund gesundheitlicher Bedenken gegenüber den Weichmachern favorisiert. Jedoch ist aus technischer Sicht auch die Verwendung von Weichmachern in der Kunststoffmatrix zur Einstellung der Härte verwendbar.

Das Kernelement 2 weist bevorzugt Polypropylen auf. Dieses kann wie bereits beschrieben mit Glasfasern zur Verstärkung des Kunststoffmaterials durchsetzt sein. Andere Materialien, die sich ebenfalls für das Kernelement 2 eignen sind Polyethylen, Ethylenvinylacetat, Acrylnitrilbutadienstyrolpolymerisat (ABS), Styrolacrylnitrilcopolymerisat (SAN), Acrylestherstyrolacrylnitrilpolymer (ASA), Polysterol (PS), TPK.

Die Herstellung der Griffe erfolgt in einer Ausführungsform durch ein zweistufiges Spritzverfahren. In einer ersten Stufe wird beispielsweise Polypropylen-Granulat auf eine Temperatur zwischen 150 und 300°C, je nach Zusammensetzung, aufgeschmolzen und über eine Kolbenschnecke mit einem Druck von 50 bis 200 bar in eine Werkzeugform eingespritzt. Dabei entsteht ein Spritzling, der dem Kernelement 2 eines Griffes entspricht. Ein solcher Spritzling kann z.B. wie in Figur 4 dargestellt aussehen.

In einer zweiten Stufe wird der Naturstoff getrocknet, um Restfeuchtigkeit zu beseitigen. Vorzugsweise erfolgt dies durch Gefriertrocknen. Dazu wird der Naturstoff in einem Lufttrockner unterhalb von -35°C vorbehandelt. Der getrocknete Naturstoff wird mit dem Kunststoff für die Kunststoffmatrix vermengt. Zusammen werden sie auf eine Temperatur zwischen 100 und 200°C, vorzugsweise zwischen 130°C und 175°C erhitzt. Das viskose Gemisch wird auf den zuvor erstellten Spritzling, d.h. das Kernelement 2 aufgespritzt.

Der Spritzling wird in eine zweite Werkzeugform umgesetzt. Dies kann mittels eines Drehtischverfahrens oder eines Umsetzverfahrens erfolgen. Vorzugsweise wird das Drehtischverfahren für kleine Griffelemente und das Umsetzverfahren für große Griffelemente z.B. einen Hammerstiel, einen Axtstiel etc. verwendet. Die Temperatur des Spritzlings wird auf 40 bis 100°C, vorzugsweise 55 bis 70°C gehalten. Typischerweise kann bei einem Drehtischverfahren dies durch ein einfaches Abkühlen von dem Spritzling erreicht werden. Bei einem Umsetzverfahren muss gegebenenfalls der Spritzling und die dazu verwendete zweite Werkzeugform auf die Temperatur erwärmt werden.

Das Aufspritzen der Kunststoffmatrix mit dem Naturstoff auf das warme oder wieder erwärmte Kernelement 2 erleichtert ein Anschmelzen der Oberfläche des Kernelements 2. Die beiden Kunststoffe verschmelzen entlang der Grenzfläche zwischen dem Kernelement 2 und dem Mantelelement 3 miteinander. Hierdurch entsteht eine den Polymeren typische Vernetzung. Die Materialschlüssige Verbindung gewährleistet eine unlösbare und mechanisch stabile Bindung des Mantelelements und des Kernelements.

## Patentansprüche

1. Griffelement mit Naturstoff aufweisend:
ein Kernelement (2) aus einem Kunststoff und
ein Mantelelement (3), das das Kernelement (2) zumindest in einem Griffbereich (4) des Griffelements (1) zumindest teilweise umgibt;
wobei das Mantelelement (3) ein Stoffgemisch aufweist, das mindestens einen Kunststoff und einen Naturstoff enthält; und
**dadurch gekennzeichnet, dass** der Naturstoff Flachs, Baumwolle, Schurwolle und/oder Leder enthält, und dass der Kunststoff des Kernelements (2) und das Stoffgemisch des Mantelelements (3) miteinander verschmolzen sind.

2. Griffelement nach Anspruch 1,
**dadurch gekennzeichnet,**
**dass** der Naturstoff als Partikel mit einem mittleren Durchmesser von 0,5 mm bis 5 mm in dem Stoffgemisch enthalten ist.

3. Griffelement nach einem der Ansprüche 1 oder 2,
**dadurch gekennzeichnet,**
**dass** das Stoffgemisch mindestens zwei Kunststoffe mit unterschiedlicher Härte in einem vorgegebenen Mischungsverhältnis aufweist, derart, dass das Stoffgemisch eine gewünschte Härte aufweist.

4. Griffelement nach einem der vorhergehenden Ansprüche,
**dadurch gekennzeichnet,**
**dass** ein Volumenanteil des Naturstoffs an dem Stoffgemisch zwischen 10 % und 50 % beträgt.

5. Griffelement nach einem der vorhergehenden Ansprüche,
**dadurch gekennzeichnet,**
**dass** der Kunststoff für das Kernelement Polypropylen aufweist.

6. Griffelement nach einem der vorhergehenden Ansprüche,
**dadurch gekennzeichnet,**
**dass** dem Kunststoff für das Kernelement Glasfasern und/oder keramische Stoffe beigemischt sind.

7. Griffelement nach einem der vorhergehenden Ansprüche,
**dadurch gekennzeichnet,**
**dass** das Kernelement längsverlaufende und/oder querverlaufende Rillen in dem von dem Mantelbereich umfassten Bereich aufweist.

8. Griffelement nach einem der vorhergehenden Ansprüche,
**dadurch gekennzeichnet,**
**dass** der Kunststoff für das Kernelement (2) und der Kunststoff für das Mantelelement (3) verschieden sind.

9. Verfahren zur Herstellung eines Griffelements (1) mit den folgenden Schritten:
- Spritzen eines Kunststoffs zum Formen eines Kernelements (2);
- Vermischen eines Kunststoffes und eines Naturstoffes zu einem Stoffgemisch;
- Erwärmen des Kernelements (2) auf eine Temperatur im Bereich von 40°C bis 100°C; und
- Spritzen des Stoffgemisches um das erwärmte Kernelement (2) zum Formen eines Mantelelements (3), das an dem Kernelement haftet,
**dadurch gekennzeichnet, dass**
der Naturstoff Flachs, Baumwolle, Schurwolle und/oder Leder enthält.

10. Verfahren nach Anspruch 9,
**dadurch gekennzeichnet,**
**dass** der Naturstoff getrocknet wird, bevor er mit dem Kunststoff vermischt wird.

11. Verfahren nach Anspruch 9 oder 10,
**dadurch gekennzeichnet,**
**dass** der Kunststoff zum Formen eines Kernelementes (2) und der Kunststoff zum Vermischen mit dem Naturstoff verschieden sind.

## Claims

1. Handle with natural material, comprising:
- a core element (2) made of a plastic material, and
- a sleeve element (3) at least partially surrounding the core element (2) at least in a gripping region (4) of the handle (1);
wherein the sleeve element (3) comprises a material mixture containing at least a plastic material and a natural material; and
**characterized in that** the natural material contains flax, cotton, new wool and/or leather, and **in that** the plastic material of the core element (2) and the material mixture of the sleeve element (3) are fused with each other.

2. The handle according to claim 1,
**characterized in**
**that** the natural material is contained in the material mixture as particles having an average diameter in the range of 0.5 mm to 5 mm.

3. The handle according to claim 1 or 2,
**characterized in**
**that** the material mixture comprises at least two types of plastic materials of different hardness within a given mixture ratio in such a way that the material mixture has a desired hardness.

4. The handle according to any one of the preceding claims,
**characterized in**
**that** a volume share of the natural material in the material mixture amounts to between 10% and 50%.

5. The handle according to any one of the preceding claims,
**characterized in**
**that** the plastic material for the core element comprises polypropylene.

6. The handle according to any one of the preceding claims,
**characterized in**
**that** glass fibres and/or ceramic materials are added to the plastic material for the core element.

7. The handle according to any one of the preceding claims,
**characterized in**
**that** the core element comprises longitudinal and/or transverse grooves within the region surrounded by the sleeve region.

8. The handle according to any one of the preceding claims,
**characterized in**
**that** the plastic material for the core element (2) and the plastic material for the sleeve element (3) are different from each other.

9. A method of manufacturing a handle (1), comprising the following steps:
- injection-moulding of a plastic material to form a core element (2);
- mixing a plastic material and a natural material to obtain a material mixture;
- warming the core element (2) up to a temperature within the range of 40°C to 100°C; and
- injection-moulding the material mixture around the warmed up core element (2) to form a sleeve element (3) adhering to the core element,
**characterized in**
**that** the natural material contains flax, cotton, new wool and/or leather.

10. The method according to claim 9,
**characterized in**
**that** the natural material is dried before being mixed together with the plastic material.

11. The method according to claim 9 or 10,
**characterized in**
**that** the plastic material for forming a core element (2) and the plastic material for mixing with the natural material are different from each other.

## Revendications

1. Poignée avec un matériau naturel, comportant :
- un élément de noyau (2) réalisé en matière plastique ; et
- un élément d'enveloppe (3) entourant au moins partiellement l'élément de noyau (2) dans au moins une zone de préhension (4) de la poignée (1) ;
l'élément d'enveloppe (3) présentant un mélange de matériaux contenant au moins une matière plastique et un matériau naturel ; et
**caractérisée en ce que** ledit matériau naturel contient du lin, du coton, de la laine vierge et/ou du cuir, et que la matière plastique de l'élément de noyau (2) et le mélange de matériaux de l'élément d'enveloppe (3) sont fusionnés l'un avec l'autre.

2. Poignée selon la revendication 1,
**caractérisée en ce**
**que** le matériau naturel est contenu dans le mélange de matériaux sous forme de particules ayant un diamètre moyen de 0,5 mm à 5 mm.

3. Poignée selon l'une des revendications 1 ou 2,
**caractérisée en ce**
**que** ledit mélange de matériaux présente au moins deux types de matière plastique de dureté différente en une proportion de mélange donnée telle que ledit mélange de matériaux présente une dureté souhaitée.

4. Poignée selon l'une des revendications précédentes,
**caractérisée en ce**
**qu'**un rapport en volume dudit matériel naturel dans le mélange de matériaux a une valeur située entre 10 % et 50 %.

5. Poignée selon l'une des revendications précédentes,
**caractérisée en ce**
**que** la matière plastique pour l'élément de noyau présente du polypropylène.

6. Poignée selon l'une des revendications précédentes,
**caractérisée en ce**
**que** des fibres de verre et/ou des matériaux céramiques sont ajoutés à la matière plastique pour l'élément de noyau.

7. Poignée selon l'une des revendications précédentes,
**caractérisée en ce**
**que** l'élément de noyau présente des rainures longitudinales et/ou transversales dans la zone entourée par la zone d'enveloppe.

8. Poignée selon l'une des revendications précédentes,
**caractérisée en ce**
**que** la matière plastique pour l'élément de noyau (2) et la matière plastique pour l'élément d'enveloppe (3) sont différentes.

9. Procédé de fabrication d'une poignée (1), comprenant les étapes suivantes :
- moulage par injection d'une matière plastique pour former un élément de noyau (2) ;
- mélange d'une matière plastique et d'un matériau naturel pour obtenir un mélange de matériaux ;
- chauffage de l'élément de noyau (2) à une température située dans une plage entre 40°C et 100°C ; et
- moulage par injection du mélange de matériaux autour de l'élément de noyau (2) chauffé pour former un élément d'enveloppe (3) qui adhère à l'élément de noyau,
**caractérisé en ce que**
le matériau naturel contient du lin, du coton, de la laine vierge et/ou du cuir.

10. Procédé selon la revendication 9,
**caractérisé en ce que**
le matériau naturel est séché avant d'être mélangé avec la matière plastique.

11. Procédé selon la revendication 9 ou 10,
**caractérisé en ce**
**que** la matière plastique pour la formation d'un élément de noyau (2) et la matière plastique pour le mélange avec le matériau naturel sont différentes l'une de l'autre.
